# EUROPEAN PATENT SPECIFICATION

(11) **EP 2 783 957 B1**
(45) Date of publication and mention of the grant of the patent: **19.04.2017**
(21) Application number: 14161392.7
(22) Date of filing: 25.03.2014
(51) Int. Cl.: B62J 17/02, B62J 99/00

(54) **Saddle type vehicle**
Sattelfahrzeug
Véhicule de type à enfourcher

(30) Priority: 29.03.2013 JP 2013075175
(43) Date of publication of application: 01.10.2014
(73) Proprietor: Honda Motor Co., Ltd., Tokyo 107-8556 (JP)
(72) Inventor: Otsubo, Mamoru, Saitama, 351-0193 (JP); Kito, Genichi, Saitama, 351-0193 (JP); Tateishi, Yasushi, Saitama, 351-0193 (JP)
(74) Representative: Ahner, Philippe

(56) References cited:
- JP-A- 2006 123 755
- JP-A- 2012 171 524
- US-A- 4 331 358
- US-A1- 2006 012 207

## Description

### Technical Field

The present invention relates to a saddle type vehicle of a scooter type which includes an exterior cover.

### Background Art

Conventionally, a saddle type vehicle of a scooter type is known wherein a molding (side guard) for protecting a side face of the vehicle is provided on an outer side of an exterior cover which covers a side of a vehicle body frame (refer to, for example, Japanese Patent Laid-Open No. 2010-221908 and Japanese Patent Laid-Open No. 2009-241900). As a molding of the type mentioned, molded articles principally made of metal, resin or the like are used.

The closest pior art document JP 2012 171524 describes a saddle type vehicle in accordance with the preamble of claim 1.

### Summary of the invention

### Problem to Be Solved by the invention

A molding of a conventional saddle type vehicle is a part separate from an exterior cover. Therefore, not only the number of parts increases, but also time is required for an assembling operation of the molding by a bolt or the like. Thus, it seems a prospective idea to stick a seal member having thickness as a molding on an exterior cover. However, the exterior cover of a general saddle type vehicle intensively employs a curved surface. Therefore, time is required for a sticking operation of the seal member, and improvement in productivity cannot be anticipated.

It is an object of the present invention to provide a saddle type vehicle wherein the productivity can be improved also where a seal member is stuck as a molding on an exterior cover.

### Means for Solving the Problem

In the invention according to claim 1, there is provided a saddle type vehicle including an exterior cover configured to cover a side of a vehicle body frame, and a molding provided on an outer side of the exterior cover, and wherein the molding is configured from a seal member and is stuck on the exterior cover, and the exterior cover has a sticking face formed linearly in a direction orthogonal to a longitudinal direction of the seal member and having the seal member stuck thereto.

In the invention according to claim 2, the seal member is configured from resin having a low stretchability at least in the longitudinal direction.

In the invention according to claim 3, the seal member is divided at a position at which the exterior cover is divided.

In the invention according to claim 4, an end portion of a divided portion of the seal member is formed obliquely with respect to a line orthogonal to the longitudinal direction of the seal member.

In the invention according to claim 5, the exterior cover has a stepped portion at a position of a lower edge of the sticking face of the seal member in a region neighboring with an outer edge portion of a seat provided at a rear location of the vehicle body frame.

In the invention according to claim 6, the sticking face of the seal member of the exterior cover is configured from a curved face formed from a linear portion successively inclined in the direction orthogonal to the longitudinal direction of the seal member.

### Effects of the invention

With the invention according to claim 1, even if the seal member is stuck as a molding on the exterior cover, the productivity can be enhanced.

With the invention according to claim 2, even if the seal member has a long distance from a starting end to a terminal end of sticking, the sticking is facilitated and a positional displacement at the terminal end of the sticking can be suppressed.

With the invention according to claim 3, even if a dispersion occurs with a joining portion between the exterior covers, the sticking of the seal member is not influenced by the dispersion. Therefore, the productivity can be enhanced.

With the invention according to claim 4, even if a positional displacement appears between the seals neighboring with each other, the opportunity for re-trial of sticking of the seal member decreases. Therefore, the productivity can be enhanced.

With the invention according to claim 5, in the region neighboring with an outer edge portion of the seat provided at a rear location of the vehicle body frame, the seal member can be made less likely to come off. Further, since the seal member can be stuck readily at an accurate position in the region, the productivity can be enhanced.

With the invention according to claim 6, even if a curved face is formed on the sticking face of the seal member at an end portion of the exterior cover, sticking of the seal member is facilitated. Therefore, the productivity can be enhanced.

### Brief Description of the Drawings

FIG. 1 is a left side elevational view depicting a motorcycle 1 of a scooter type as a saddle type vehicle according to an embodiment of the present invention.
FIG. 2 is a perspective view extractively depicting part of a cover member 6 and peripheral components from the motorcycle 1 depicted in FIG. 1.
FIG. 3 is a left side elevational view extractively depicting part of the cover member 6 and peripheral components from the motorcycle 1 depicted in FIG. 1.
FIG. 4 is a partial enlarged view of a region S depicted in FIG. 3.
FIGS. 5(A) and 5(B) are partial enlarged views depicting different examples of a configuration of the region S depicted in FIG. 3.
FIG. 6 is a sectional view taken along line A-A of FIG. 3.
FIG. 7 is a sectional view taken along line B-B of FIG. 3.
FIG. 8 is a sectional view taken along line C-C of FIG. 3.
FIG. 9 is a sectional view taken along line D-D of FIG. 3.
FIG. 10 is a left side elevational view depicting a seal member 50A wherein a sticking position of a seal is changed.
FIG. 11 is a left side elevational view depicting a seal member 50B wherein the division number is increased.
FIG. 12 is a left side elevational view depicting a seal member 50C wherein a width of the seal is changed.

### Mode for Carrying Out the invention

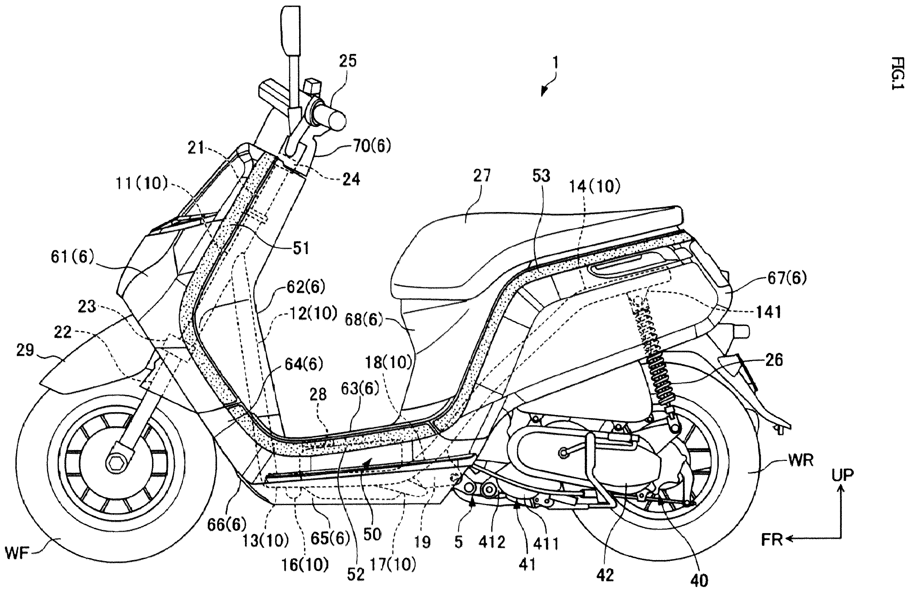

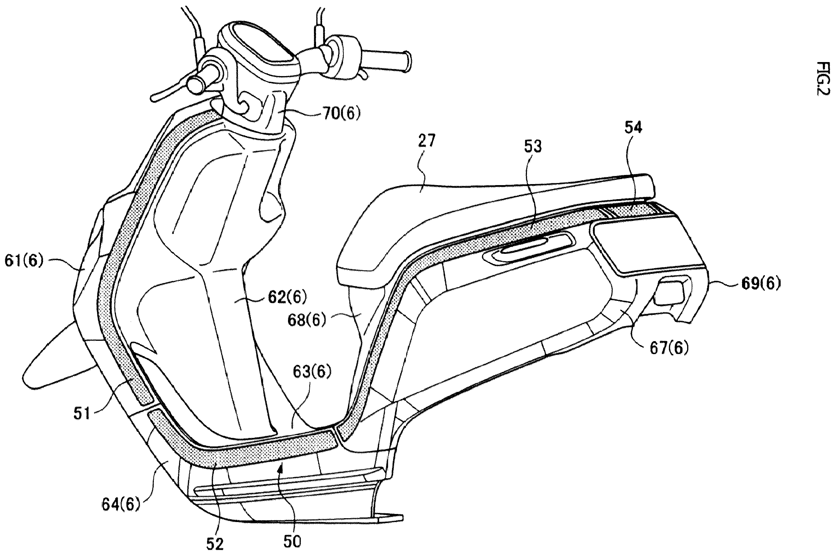

In the following, an embodiment wherein a saddle type vehicle according to the present invention is applied to a motorcycle of a scooter type is described with reference to the drawings. First, a general configuration of a motorcycle 1 according to the present embodiment is described with reference to FIGS. 1 and 2. FIG. 1 is a left side elevational view depicting the motorcycle 1 of a scooter type as a saddle type vehicle according to the present embodiment. FIG. 2 is a perspective view extractively depicting part of a cover member 6 and peripheral components from the motorcycle 1 depicted in FIG. 1 (perspective view when part of the cover member and the peripheral components are viewed from a rear of a left side face of the motorcycle 1).

In the following description, unless otherwise specified, representations of forward and rearward, leftward and rightward, and upward and downward directions are defined as directions as viewed from an occupant (rider) who rides the motorcycle. Further, in the figures, an arrow mark FR indicates the forward direction (traveling direction) of the vehicle, and an arrow mark UP indicates the upward direction of the vehicle. Further, in the following description, the motorcycle 1 is suitably referred to also as "vehicle."

As shown in FIG. 1, the motorcycle 1 of the present embodiment is configured from a vehicle body including a vehicle body frame 10 as a main frame and so forth, a front wheel WF, a front fender 29, a rear wheel WR, a unit swing engine 40, a link mechanism 5, a rear cushion 26, a seat 27, a cover member 6, and a fuel tank 28 as principal components thereof. The front fender 29 is disposed above the front wheel WF. The unit swing engine 40 supports the rear wheel WR for rotation on a rear end side thereof. The link mechanism 5 is interposed between the unit swing engine 40 and the vehicle body frame 10. The rear cushion 26 is interposed between the unit swing engine 40 and the vehicle body frame 10 at a rear location of the vehicle. The seat 27 allows the occupant to be seated thereon. The cover member 6 serves as an exterior cover which covers side faces of the vehicle.

The vehicle body frame 10 is configured from a plurality of kinds of steel members coupled integrally with each other by welding. The vehicle body frame 10 includes a head pipe 11, a down frame 12 as a downwardly extending portion, a floor frame 13 as a floor portion, a seat rail 14, and a plurality of cross members (a front side cross pipe 16, a rear side cross pipe 17 and so forth).

The head pipe 11 is provided at a front portion of the vehicle body frame 10 and rotatably supports the front wheel WF for steering movement.

The down frame 12 extends rearwardly downwardly from the head pipe 11. The down frame 12 is connected at a front end portion thereof to the head pipe 11. A rear end portion side of the down frame 12 extends obliquely downwardly rearwardly.

As the floor frame 13, a pair of left and right floor frames 13 are provided. The pair of floor frames 13 extend rearwardly from a lower portion of the down frame. The floor frames 13 are connected at a front end portion thereof to a lower portion of the down frame 12. Rear end portions of the floor frames 13 extend rearwardly from the down frame 12.

As the seat rail 14, a pair of left and right seat rails 14 are provided. The seat rails 14 are provided below the seat 27. The seat rails 14 extend upwardly rearwardly from a rear portion of the floor frames 13. The seat rails 14 are connected at a front end portion thereof to the floor frames 13. Rear end portions of the seat rails 14 extend obliquely upwardly rearwardly.

A curved portion 18 is provided on a boundary between the floor frames 13 and the seat rails 14. Pivot plates 19 are provided on the curved portions 18 and extend downwardly from the curved portions 18. The pivot plates 19 are provided in a left and right pair. The pivot plates 19 are joined together to the curved portions 18.

The cross members are formed from pipe members extending in the leftward and rightward direction and connect the pair of floor frames 13 and the pair of seat rails 14 to each other in the leftward and rightward direction. The cross members include the front side cross pipe 16 and the rear side cross pipe 17.

The front side cross pipe 16 and the rear side cross pipe 17 connect the pair of floor frames 13 to each other in the leftward and rightward direction. The front side cross pipe 16 and the rear side cross pipe 17 extend in the leftward and rightward direction of the vehicle body. The front side cross pipe 16 and the rear side cross pipe 17 are provided in a spaced relationship from each other by a predetermined distance in the forward and rearward direction of the vehicle. The front side cross pipe 16 connects front portions of the front side of the floor frames 13 to each other. The rear side cross pipe 17 connects rear portions of the rear side of the floor frames 13.

The front wheel WF is supported for rotation by a pair of left and right front forks 22. A steering stem 21 is fitted on the head pipe 11 at an upper location of the pair of front forks 22. The steering stem 21 is connected to a top bridge 24 and a bottom bridge 23. The steering stem 21 supports the front forks 22 for leftward and rightward pivotal motion with respect to the head pipe 11 through the bottom bridge 23. A handlebar 25 is provided on the top bridge 24 and can steer the front wheel WF.

The unit swing engine 40 is supported for rocking motion on the vehicle body frame 10. The unit swing engine 40 is supported, at a front portion side thereof, for rocking motion on the vehicle body frame 10 through the link mechanism 5 hereinafter described. The unit swing engine 40 is supported, at a rear end portion thereof, for rocking motion on the vehicle body frame 10 through the rear cushion 26. Further, the unit swing engine 40 holds, on a rear side thereof, the rear wheel WR for rotation thereon.

The unit swing engine 40 is configured from an engine main body 41 and a power transmission mechanism 42 provided integrally with each other.

The engine main body 41 is a power unit (prime mover) which generates driving force for the motorcycle 1 and is mounted at a substantially central portion of the vehicle body in the forward and rearward direction. The engine main body 41 has a crankcase 411 on a rear portion side thereof and is connected to the link mechanism 5 at a boss portion 412 at a front portion of the crankcase 411.

The power transmission mechanism 42 transmits driving force of the engine main body 41 to the rear wheel WR. The power transmission mechanism 42 is disposed on the rear portion side of the engine main body 41 and attached to the engine main body 41 thereby to configure the unit swing engine 40 together with the engine main body 41. The power transmission mechanism 42 is disposed on the left side in the vehicle widthwise direction.

The link mechanism 5 permits rocking motion of the unit swing engine 40 in the upward and downward directions and the forward and backward directions to absorb an impact load inputted to the rear wheel WR from the road surface. The link mechanism 5 is supported for rotatable motion on the pivot plates 19 and supported for rotatable motion on the unit swing engine 40.

The rear cushion 26 absorbs an impact load inputted from the road surface to the rear wheel WR by a buffering action thereof. The rear cushion 26 is connected at an upper end portion thereof to the seat rails 14 through an upper end supporting bracket 141. The rear cushion 26 is connected at a lower end portion thereof to a rear end portion of the unit swing engine 40.

The rear cushion 26 extends on a line interconnecting the upper end supporting bracket 141 and the rear end portion of the unit swing engine 40. The rear cushion 26 extends obliquely downwardly rearwardly. The rear cushion 26 is provided in a state in which it assures a range (stroke) within which it is compressed. The rear cushion 26 is inclined in a stroke direction which is a direction in which the rear cushion 26 is compressed.

The cover member 6 is configured from a front cover 61, a leg side shield cover 62, a floor cover 63, a floor side cover 64, an under cover 65, an inner fender cover 66, a rear side cover 67, a seat center cover 68, a rear center cover 69 and so forth. In the following description, each of the covers 61 to 68 which configure the cover member 6 is referred to also as "cover."

The front cover 61 is disposed on a front portion of the motorcycle 1 and covers the front portion and so forth of the vehicle body frame 10.

The leg side shield cover 62 covers, on the front side of the riding position of the occupant, part of the head pipe 11 and part of the down frame 12 from a rear portion side of the motorcycle 1.

The floor cover 63 covers, below the riding position of the occupant, an upper side of the pair of floor frames 13 and an upper side of the fuel tank 28 from an upper side of the motorcycle 1. A front end portion and a rear end portion of the floor cover 63 extend to the upper side.

A top face of the floor cover 63 forms a flattened foot receiving face, and the floor cover 63 functions as a floor step. The floor step is disposed above the floor frames 13 and receives, on the top face side thereof, the feet of the occupant. The floor step is formed between the head pipe 11 and the seat 27 in the forward and rearward direction of the motorcycle 1.

The floor side cover 64 is disposed on a side portion of the motorcycle 1 below the riding position of the occupant and covers the fuel tank 28 hereinafter described and so forth from a side below the motorcycle 1. It is to be noted that, also on a right side face of the vehicle (on a right side in the advancing direction), a floor side cover (not shown) formed in a left-right symmetrical relationship with the floor side cover 64 disposed on a left side face is disposed.

The under cover 65 is disposed at a lower portion of the motorcycle 1 below the riding position of the occupant and covers at least lower portions of the floor frames 13 from the lower side. The under cover 65 is secured to the front side cross pipe 16 and the rear side cross pipe 17.

The inner fender cover 66 is disposed behind the front wheel WF in front of the under cover 65. The inner fender cover 66 covers a lower portion of the front portion of the motorcycle 1 from a front side of the motorcycle 1. The inner fender cover 66 is engaged with the under cover 65.

The rear side cover 67 is disposed on the side of a rear portion of the motorcycle 1 and covers the opposite side faces of a lower portion of the seat 27. It is to be noted that, also on the right side face of the vehicle (on the right side in the advancing direction), a rear side cover (not shown) formed in a left-right symmetrical relationship with the rear side cover 67 disposed on the left side face is disposed.

The seat under center cover 68 covers a lower portion of a front portion of the seat 27. The rear center cover 69 covers a lower portion of a rear portion of the seat 27 as shown in FIG. 2. A handlebar cover 70 covers peripheral portions of the top bridge 24.

In the cover member 6 in the present embodiment, a seal member 50 as a molding is stuck on the front cover 61, floor side cover 64, rear side cover 67, and rear center cover 69. The configuration of the seal member 50 and the sectional shape of the covers (61, 64, 67, 69) on which the seal member 50 is stuck are hereinafter described.

The fuel tank 28 is provided below the floor cover (floor step) 63. The fuel tank 28 is disposed between the floor cover 63 and the under cover 65 in the upward and downward direction. Further, the fuel tank 28 is disposed between the floor frames 13 in the vehicle widthwise direction and besides is disposed between the front side cross pipe 16 and the rear side cross pipe 17 in the forward and rearward direction.

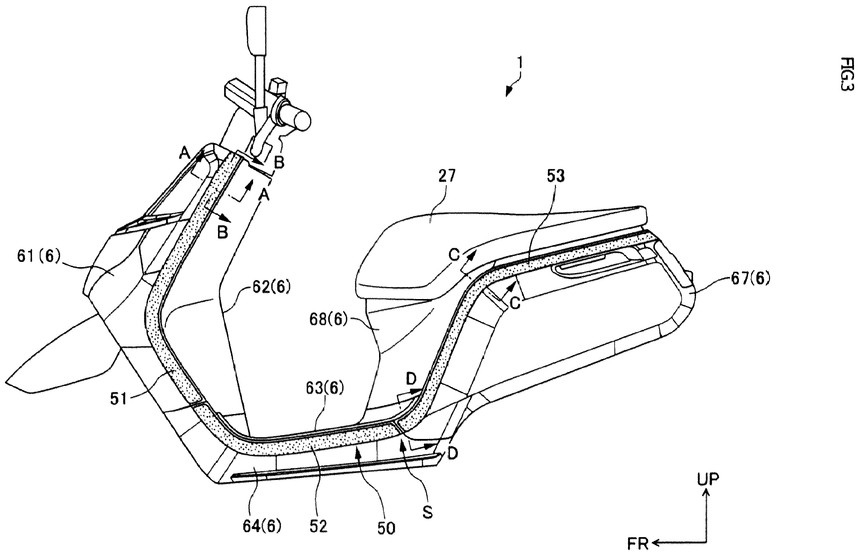

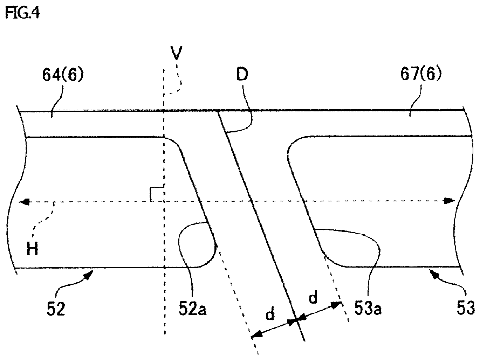

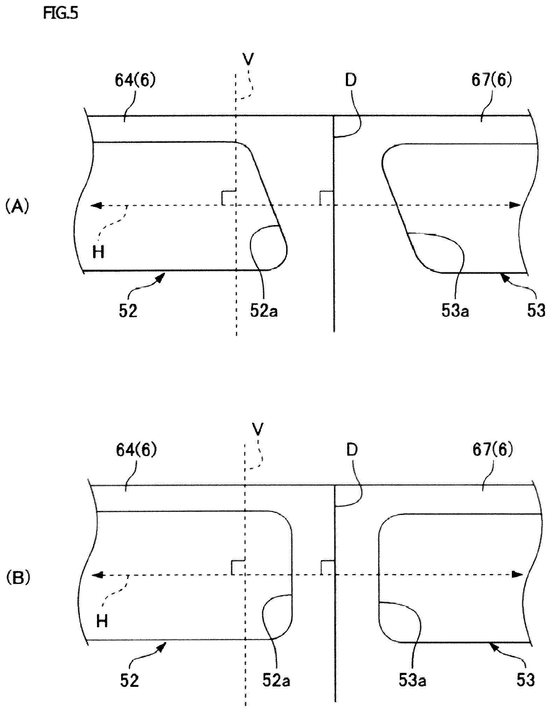

Now, a structure of the cover member 6 and the seal member 50 in the present embodiment is described with reference to FIGS. 3 to 9. FIG. 3 is a left side elevational view extractively depicting part of the cover member 6 and peripheral components from the motorcycle 1 depicted in FIG. 1. FIG. 4 is a partial enlarged view of a region S depicted in FIG. 3. FIGS. 5(A) and 5(B) are partial enlarged views depicting different examples of a configuration of the region S depicted in FIG. 3.

As shown in FIG. 3, on an outer side of the front cover 61, floor side cover 64, rear side cover 67, and rear center cover 69 (refer to FIG. 2) of the cover member 6, the seal member 50 is stuck as a molding. The seal member 50 includes a front seal 51, a floor side seal 52, a rear side seal 53, and a rear center seal 54. In the following description, each of the front seal 51, floor side seal 52, rear side seal 53, and rear center seal 54 is referred to also as "seal."

The front seal 51 is stuck on an outer side face of the front cover 61. The front seal 51 is stuck over a range from a position of an upper face portion of the front cover 61 in the proximity of the handlebar cover 70 (refer to FIG. 2) to a lower end portion of the front cover 61 (short of the location at which the front cover 61 is joined to the floor side cover 64). It is to be noted that, also on the right side face of the vehicle (on the right side in the advancing direction), a front seal (not shown) formed in a left-right symmetrical relationship with the front seal 51 stuck on the left side face is stuck on the outer side face of the front cover 61.

The floor side seal 52 is stuck on an outer side face of the floor side cover 64. The floor side seal 52 is stuck over a range from a front end portion of the floor side cover 64 (short of the location at which the floor side cover 64 is joined to the front cover 61) to a rear end portion of the floor side cover 64 (short of the location at which the floor side cover 64 is joined to the rear side cover 67). It is to be noted that, also on the right side face of the vehicle (on the right side in the advancing direction), a floor side seal (not shown) formed in a left-right symmetrical relationship with the floor side seal 52 stuck on the left side face is stuck on the outer side face of the floor side cover (not shown) disposed on the right side face of the vehicle.

It is to be noted that the front seal 51 and a front portion of the floor side seal 52 configure an outermost end of the leg shield in the vehicle widthwise direction.

The rear side seal 53 is stuck on an outer side face of the rear side cover 67. The rear side seal 53 is stuck over a range from a front end portion of the rear side cover 67 (short of the location at which the rear side cover 67 is joined to the floor side cover 64) to a rear end portion of the rear side cover 67. It is to be noted that, also on the right side face of the vehicle (on the right side in the advancing direction), a rear side seal (not shown) formed in a left-right symmetrical relationship with the rear side seal 53 stuck on the left side face is stuck on the outer side face of the rear side cover (not shown) disposed on the right side face of the vehicle.

The rear center seal 54 is stuck on an outer side face (middle upper location) of the rear center cover 69 as shown in FIG. 2.

As shown in FIG. 2, the seal member 50 in the present embodiment is configured from seven divisional seals disposed at separate positions of the cover member 6. In particular, the seal member 50 is disposed between the front cover 61 and the floor side cover 64, between the floor side cover 64 and the rear side cover 67 and between the left and right rear side covers 67 and the rear center cover 69 (including also those on the right side face of the vehicle).

The regions of the front cover 61, floor side cover 64, rear side covers 67, and rear center cover 69 in which the seals are stuck have a seal sticking face formed linearly in a direction orthogonal to the longitudinal direction of the seal. The shape of the sticking face of the seal member 50 is hereinafter described.

Now, the shape of an end portion of the seal member 50 is described. In the present embodiment, an end portion of each divisional part of the seal member 50 is formed obliquely with respect to a line orthogonal to the longitudinal direction of the seal. For example, as shown in FIG. 4, an end portion 52a of the floor side seal 52 and an end portion 53a of the rear side seal 53 are formed obliquely with respect to a line V orthogonal to the longitudinal direction H of the seals. It is to be noted that FIG. 4 (and FIG. 5) schematically shows a region S shown in FIG. 3.

As shown in FIG. 4, a dividing plane D between the floor side cover 64 and the rear side cover 67 is formed obliquely with respect to the longitudinal direction H of the seals. In this instance, the end portion 52a of the floor side seal 52 and the end portion 53a of the rear side seal 53 are formed such that they extend in parallel to and in a spaced relationship by an equal distance d from the dividing plane D. Such shapes of end portions of the seals as just described are common to all cases in which the dividing plane D between neighboring covers is formed obliquely with respect to the longitudinal direction H of the seals. By forming the opposing end portions of neighboring seals obliquely with respect to the line V orthogonal to the longitudinal direction H of the seals in this manner, a positional displacement between end portions of neighboring seals can be made less conspicuous. Particular examples wherein such a positional displacement is made less conspicuous are hereinafter described.

On the other hand, the dividing plane D between neighboring covers is sometimes formed such that it extends orthogonally to the longitudinal direction H of the seals. FIGS. 5(A) and 5(B) are partial enlarged views of other examples of the configuration of the region S shown in FIG. 3. In particular, FIGS. 5(A) and 5(B) show examples wherein the dividing plane D between the floor side cover 64 and the rear side cover 67 extends orthogonally with respect to the longitudinal direction H of the seals. Similarly as in the case of FIG. 4 described hereinabove, in FIG. 5(A), the end portion 52a of the floor side seal 52 and the end portion 53a of the rear side seal 53 are formed obliquely with respect to the line V orthogonal to the longitudinal direction H of the seals.

On the other hand, in FIG. 5(B), the end portion 52a of the floor side seal 52 and the end portion 53a of the rear side seal 53 are formed in parallel to the line V orthogonal to the longitudinal direction H of the seals. Therefore, if a positional displacement occurs between the end portion 52a of the floor side seal 52 and the end portion 53a of the rear side seal 53, then the positional displacement is likely to be conspicuous in appearance. FIGS. 5(A) and 5(B) illustrate manners in which the end portion 53a of the rear side seal 53 is displaced downwardly at an equal distance from the end portion 52a of the floor side seal 52. If the manners in FIGS. 5(A) and 5(B) are compared with each other, then even if the positional displacement amount is equal, the positional displacement in FIG. 5(A) is less conspicuous in appearance from that in FIG. 5(B).

The effect just described is common to all cases in which the dividing plane D between the floor side cover 64 and the rear side cover 67 is formed obliquely with respect to the longitudinal direction H of the seals. In other words, even if the dividing plane D between neighboring covers is formed obliquely with respect to the longitudinal direction H of the seals or is formed orthogonally to the longitudinal direction H of the seals, if the opposing end portions of neighboring seals are formed obliquely with respect to the longitudinal direction H of the seals, then the positional displacement between them can be made less conspicuous.

Further, in the present embodiment, a corner portion positioned at an end portion of a seal (for example, a corner portion 52b of the floor side seal 52 shown in FIG. 4) is formed in a substantially rounded shape. Such a shape of the corner portion of the seal as just described is common to all of the other seals.

The seal member 50 is configured from a resin material having a low stretchability in the longitudinal direction thereof. For example, a member formed by sticking a transparent PET film and a chrome-plated tone film to each other and applying a bonding agent uniformly to a sticking face to a cover is used. Since the stretchability of the seal member 50 in the longitudinal direction is low, the elongation amount when the seal member 50 is pulled in the longitudinal direction is small. However, the seal member 50 has a flexibility in the thicknesswise direction thereof.

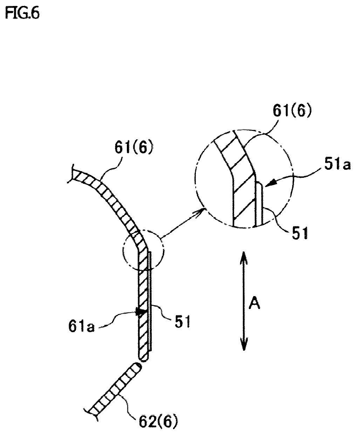

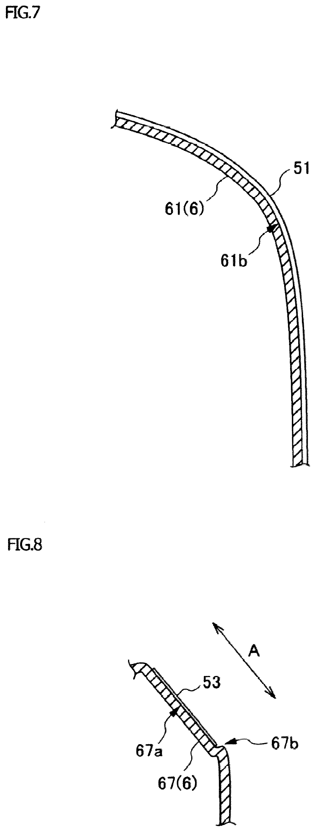

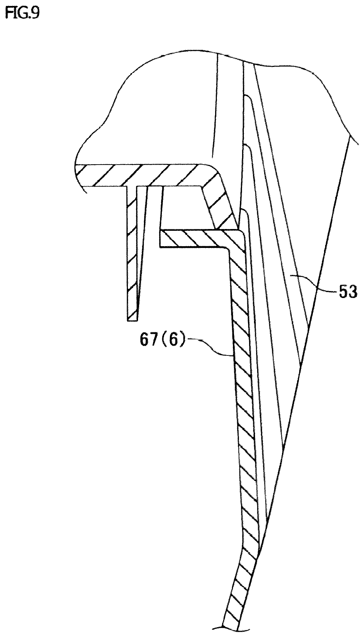

Now, the shape of the seal sticking face of the cover member 6 is described. FIG. 6 is a sectional view taken along line A-A of FIG. 3. FIG. 7 is a sectional view taken along line B-B of FIG. 3. FIG. 8 is a sectional view taken along line C-C of FIG. 3. FIG. 9 is a sectional view taken along line D-D of FIG. 3. It is to be noted that, in FIGS. 6 to 9, the sectional shape is shown in a suitably simplified form and hatchings of the section of the seals are omitted.

As shown in FIG. 6, a seal sticking face 61a is formed linearly on the front cover 61 in a direction A orthogonal to the longitudinal direction of the front seal 51 (direction orthogonal to the plane of the figure). Therefore, on the seal sticking face 61a of the front cover 61, the front seal 51 can be stuck linearly without being curved or bent. The shape of the seal sticking face 61a of the front cover 61 is common also to those of the floor side cover 64 and the rear side cover 67. In particular, the seal sticking face of the floor side cover 64 and the rear side cover 67 is formed linearly in a direction orthogonal to the longitudinal direction of the seals to be stuck thereon. Further, as shown in the partial enlarged view of FIG. 6, an end portion 51a of a face of the front seal 51 on the opposite side to the seal sticking face 61a is chamfered so as to have a shape of a rounded face. This similarly applies also to the floor side cover 64 and the rear side cover 67.

Meanwhile, also it is possible to stick the front seal 51 in a curve on the seal sticking face 61a by deflecting the front seal 51 in a thicknesswise direction. Side edges of an upper portion side of the front cover 61 are formed in a curve (not shown) as viewed in front elevation. Therefore, as shown in FIG. 7, the seal sticking face 61b in this region is formed in a curve similarly to the front cover 61. In this instance, the front seal 51 is stuck in a curve in the thicknesswise direction thereof on the seal sticking face 61b. In this manner, the front seal 51 is stuck linearly on the seal sticking face 61a in the direction orthogonal to the longitudinal direction thereof but is stuck, in the thicknesswise direction thereof, in a curve on the seal sticking face 61b. This similarly applies also to the floor side cover 64 and the rear side cover 67.

Further, as shown in FIG. 3, part of the rear side seal 53 is stuck on the rear side cover 67 in a region neighboring with an outer edge portion of the seat 27. As shown in FIG. 8, in the region of the rear side cover 67 just described, a seal sticking face 67a is formed linearly in the direction A orthogonal to the longitudinal direction of the rear side seal 53 (orthogonal direction to the plane of the figure) and a stepped portion 67b is provided on a lower edge of the seal sticking face 67a. The stepped portion 67b is provided along the longitudinal direction of the seal sticking face 67a. The rear side seal 53 is stuck so as extend along the stepped portion 67b in the longitudinal direction thereof.

The seal sticking face of each cover may have, in a direction orthogonal to the longitudinal direction of the seal, a curved shape formed such that linear portions are inclined successively. For example, as shown in FIG. 9, the sticking face of the rear side cover 67 for the rear side seal 53 is configured from a curved face which is formed such that linear portions are inclined successively in a direction orthogonal to the longitudinal direction of the rear side seal 53.

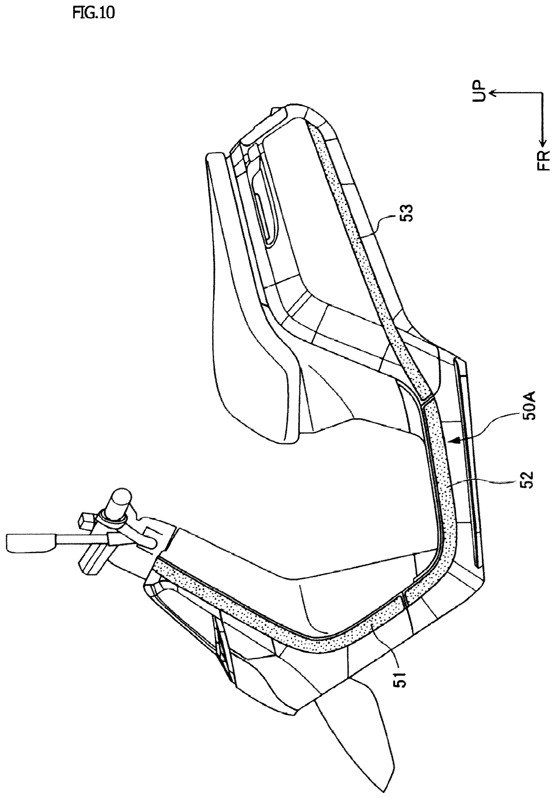

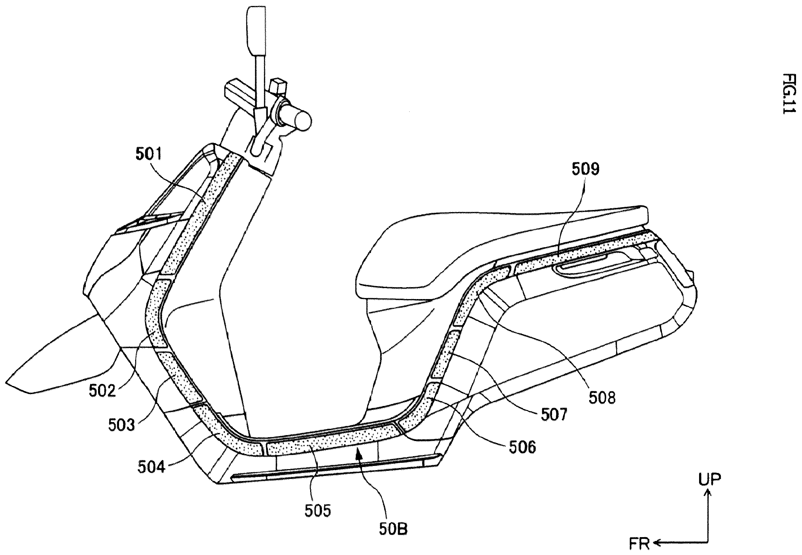

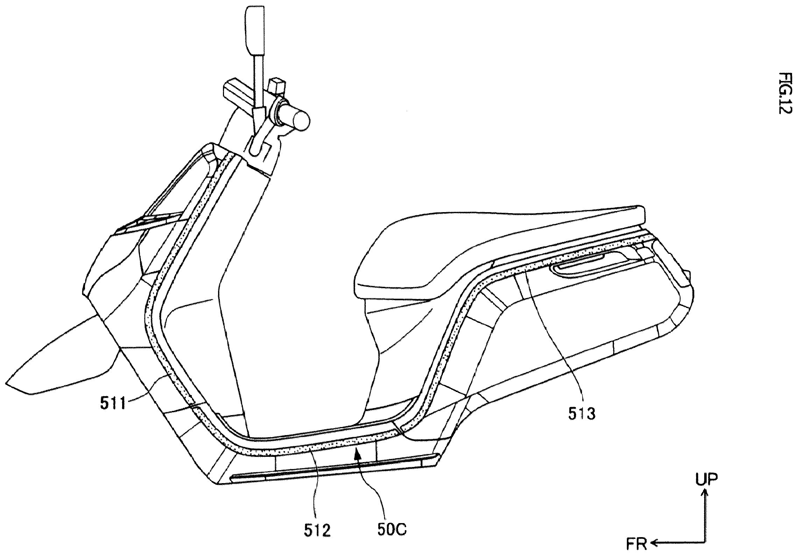

Now, other modes relating to the shape of the seal member 50 are described briefly. FIG. 10 is a left side elevational view showing a seal member 50A having a changed seal sticking position. FIG. 11 is a left side elevational view showing a seal member 50B having an increased division number. FIG. 12 is a left side elevational view showing a seal member 50C wherein the seal width is changed. FIGS. 10 to 12 are views extractively showing part of the cover member 6 and peripheral elements from the motorcycle 1. Further, in FIGS. 10 to 12, like or equivalent components to those shown in FIG. 3 are denoted by like reference symbols. It is to be noted that, in FIGS. 10 to 12, reference symbols which are not used for the description are omitted.

In the seal member 50A shown in FIG. 10, the rear side seal 53 is formed in a substantially linear shape. Further, the rear side seal 53 is stuck on a lower portion side of the rear side cover 67. The shape and the stuck position of the front seal 51 and the floor side seal 52 are same as those in FIG. 3. In this manner, the seal member 50A (50) can be stuck in such a manner that it looks as a single piece in design over a range from an end portion on the front side to an end portion on the rear side of the vehicle.

The seal member 50B shown in FIG. 11 is divided not only at positions at which the cover member 6 is divided but also at positions at which the cover member 6 is not divided. In the mode shown in FIG. 11, the seal member 50B is formed from nine divisional parts or seals as denoted by reference symbols 501 to 509.

In the seal member 50C shown in FIG. 12, seals 511 to 513 are formed such that the width thereof is one half that of the seals 51 to 53 of the seal member 50 of FIG. 3.

With the motorcycle 1 according to the present embodiment described above, for example, such effects as described below are anticipated.

In the present embodiment, the seal sticking face is formed linearly in the direction orthogonal to the longitudinal direction of the seals on the front cover 61, floor side cover 64, rear side cover 67 and rear center cover 69. Consequently, even if the seals are stuck on a curved face of the covers, the seals are not stuck on the curved face in the direction orthogonal to the longitudinal direction of the seals. Therefore, a sticking operation of the seals is facilitated. Accordingly, in the saddle type vehicle 1 according to the present embodiment, even if the seal member 50 is stuck as a molding on the covers, the productivity can be enhanced.

In the present embodiment, the seal member 50 is configured from a resin material having a low stretchability in the longitudinal direction thereof. If a seal member having a high stretchability is used alternatively, then although sticking of the seal is facilitated, the seals stretch halfway and a positional displacement of the seal appears at a terminal end of the sticking. Specifically, if a seal member wherein the distance from a starting end to a terminal end is long is used, then the positional displacement becomes great. However, the seal member 50 of the present embodiment is less likely to stretch in the longitudinal direction. Therefore, even if the seal member 50 has such a shape that the distance between the starting end to the terminal end of the sticking is long, the sticking is facilitated and the positional displacement at the terminal end of the sticking can be suppressed.

In the present embodiment, the seal member 50 is divided at a position at which the cover member 6 is divided. Consequently, even if a dispersion occurs with the joining portion between the covers neighboring with each other, the dispersion does not have an influence on the sticking of the seals. Therefore, the productivity can be enhanced.

In the present embodiment, an end portion of a location at which the seal member 50 is divided is formed obliquely with respect to the line orthogonal to the longitudinal direction of the seal. Consequently, even if a positional displacement appears between the seals neighboring with each other, the positional displacement can be less likely to be conspicuous in appearance. Accordingly, even if a positional displacement appears between the seals neighboring with each other, the necessity for re-trial of sticking of the seals decreases. Therefore, the productivity can be enhanced.

In the present embodiment, the rear side cover 67 (cover member 6) has the stepped portion 67b at a position of the lower edge of the seal sticking face 67a in the region neighboring with an outer edge of the seat 27. If the rear side seal 53 is stuck on the rear side cover 67 which does not have the stepped portion 67b, then the rear side seal 53 projects from the rear side cover 67. Therefore, when the occupant gets on or gets off from the motorcycle 1, the legs or the like of the occupant are likely to interfere with the rear side seal 53. Therefore, the rear side seal 53 is likely to come off from the rear side cover 67. However, in the present embodiment, the rear side seal 53 does not project from the rear side cover 67. Therefore, when the occupant gets on or gets off from the motorcycle 1, the legs or the like of the occupant are less likely to interfere with the rear side seal 53. Accordingly, the rear side seal 53 can be configured so as not to come off from the rear side cover 67 readily. Further, the stepped portion 67b can be utilized as a positioning member for the rear side seal 53. Consequently, by sticking the rear side seal 53 along the stepped portion 67b, the rear side seal 53 can be easily stuck at an accurate position. Therefore, the productivity can be enhanced.

In the cover member 6 of the present embodiment, for example, the seal sticking face of the rear side cover 67 is configured from a curved face formed from a linear portion successively inclined in the direction orthogonal to the longitudinal direction of the seals (refer to FIG. 9). Consequently, even if a curved face is formed on the seal sticking face at an end portion of the covers in the direction orthogonal to the longitudinal direction of the seals, sticking of the seals is facilitated. Therefore, the productivity can be enhanced.

In the seal member 50 of the present embodiment, since a corner portion positioned at an end portion of the seals is formed in a substantially rounded shape, coming off of the seals can be suppressed.

While a preferred embodiment of the present invention has been described using specific terms, the present invention can be carried in various forms without being limited to the embodiment described above.

For example, in the embodiment described above, the example is described in which the present invention is applied to a motorcycle which travels by rotationally driving the rear wheel by power generated by an engine (internal combustion engine). However, the present invention is not limited to this. In particular, also it is possible to apply the present invention to a motor-driven two-wheeled vehicle which travels by driving the rear wheel to rotate only by power generated by an electric motor. Also it is possible to apply the present invention to a saddle type vehicle of the hybrid type which travels by driving the rear wheel to rotate by a combination of two kinds of power including power generated by an engine and power generated by an electric motor.

Further, the present invention can be applied not only to a saddle type vehicle of a scooter type but also to a saddle type vehicle of a motorcycle type or a cab type only if the vehicle includes a seat on which an occupant is to be seated. Further, the present invention can be applied to a three-wheeled or four-wheeled saddle type vehicle if the vehicle includes a seat on which an occupant is to be seated. In other words, the saddle type vehicle includes general vehicles which an occupant straddles the vehicle body.

### Description of Reference Symbols

- 1: Motorcycle (Saddle type vehicle)
- 6: Cover member (Exterior cover)
- 10: Vehicle body frame
- 27: Seat
- 50, 50A to 50C: Seal member
- 51: Front seal
- 52: Floor side seal
- 53: Rear side seal
- 61: Front cover
- 62: Leg side shield cover
- 63: Floor cover (Floor step)
- 64: Floor side cover
- 65: Undercover
- 66: Inner fender cover
- 67: Rear side cover
- 69: Center cover
- 67b: Stepped portion
- 68: Seat under center cover
- WF: Front wheel
- WR: Rear wheel

## Claims

1. A saddle type vehicle (1), comprising:
an exterior cover (6) configured to cover a side of a vehicle body frame (10); and
a molding provided on an outer side of the exterior cover (6), wherein the molding is configured from a seal member (50) and is stuck on the exterior cover, the exterior cover (6) has a sticking face formed linearly in a direction orthogonal to a longitudinal direction of the seal member (50) and having the seal member (50) stuck thereto, **characterised in that** the seal member (50) is formed in a linear and curved shape, and the seal member (50) is formed by sticking a resin material having a low stretchability in the longitudinal direction thereof, and formed by sticking a transparent PET film and a chrome-plated tone film to each other and applying uniformly a bonding agent to the sticking face to the exterior cover (6).

2. The saddle type vehicle (1) according to claim 1, wherein the seal member (50) is configured from resin having a low stretchability at least in the longitudinal direction.

3. The saddle type vehicle (1) according to claim 1 or 2, wherein the seal member (50) is divided at a position at which the exterior cover (6) is divided.

4. The saddle type vehicle (1) according to claim 3, wherein an end portion of a divided portion of the seal member (50) is formed obliquely with respect to a line orthogonal to the longitudinal direction of the seal member (50).

5. The saddle type vehicle (1) according to any one of claims 1 to 4, wherein the exterior cover (6) has a stepped portion (67b) at a position of a lower edge of the sticking face of the seal member (50) in a region neighboring with an outer edge portion of a seat (27) provided at a rear location of the vehicle body frame (10).

6. The saddle type vehicle (1) according to any one of claims 1 to 5, wherein the sticking face of the seal member (50) of the exterior cover (6) is configured from a curved face formed from a linear portion successively inclined in the direction orthogonal to the longitudinal direction of the seal member (50).

## Patentansprüche

1. Fahrzeug (1) vom Satteltyp, umfassend:
eine Außenabdeckung (6), welche dazu eingerichtet ist, eine Seite eines Fahrzeugkörper-Rahmens (10) zu bedecken; und
eine an einer äußeren Seite der Außenabdeckung (6) bereitgestellte Formung, wobei die Formung von einem Dichtungselement (50) eingerichtet ist und an der Außenabdeckung klebt, die Außenabdeckung (6) eine Klebefläche aufweist, welche linear in einer Richtung orthogonal zu einer longitudinalen Richtung des Dichtungselements (50) gebildet ist und daran geklebt das Dichtungselement (50) aufweist,
**dadurch gekennzeichnet, dass** das Dichtungselement (50) in einer linearen und gekrümmten Form gebildet ist und das Dichtungselement (50) gebildet ist, indem ein Harzmaterial, welches eine geringe Dehnbarkeit in der longitudinalen Richtung davon aufweist und durch Kleben eines transparenten PET-Films gebildet ist, und ein verchromter Tonfilm aneinander geklebt sind und ein Haftmittel gleichmäßig auf die Klebefläche auf die Außenabdeckung (6) aufgetragen ist.

2. Fahrzeug (1) vom Satteltyp nach Anspruch 1, wobei das Dichtungselement (50) aus Harz mit einer geringen Dehnbarkeit wenigstens in der longitudinalen Richtung eingerichtet ist.

3. Fahrzeug (1) nach Anspruch 1 oder 2, wobei das Dichtungselement (50) an einer Position unterteilt ist, an welcher die Außenabdeckung (6) unterteilt ist.

4. Fahrzeug (1) vom Satteltyp nach Anspruch 3, wobei ein Endabschnitt eines unterteilten Abschnitts des Dichtungselements (50) schräg bezüglich einer Linie orthogonal zu der longitudinalen Richtung des Dichtungselements (50) gebildet ist.

5. Fahrzeug (1) vom Satteltyp nach einem der Ansprüche 1 bis 4, wobei die Außenabdeckung (6) einen gestuften Abschnitt (67b) an einer Position eines unteren Rands der Klebefläche des Dichtungselements (50) in einem Bereich benachbart mit einem äußeren Randabschnitt eines Sitzes (27) aufweist, welcher an einer hinteren Stelle des Fahrzeugkörper-Rahmens (10) bereitgestellt ist.

6. Fahrzeug (1) vom Satteltyp nach einem der Ansprüche 1 bis 5, wobei die Klebefläche des Dichtungselements (50) der Außenabdeckung (6) von einer gekrümmten Fläche eingerichtet ist, welche aus einem linearen Abschnitt gebildet ist, welcher sukzessive in die Richtung orthogonal zu der longitudinalen Richtung des Dichtungselements (50) geneigt ist.

## Revendications

1. Véhicule de type à selle (1), comprenant :
un capot extérieur (6) configuré pour recouvrir un côté d'un châssis de carrosserie de véhicule (10) ; et
un moulage prévu sur un côté extérieur du capot extérieur (6), dans lequel le moulage est configuré à partir d'un élément d'étanchéité (50) et est collé sur le capot extérieur, le capot extérieur (6) a une face de collage formée linéairement dans une direction orthogonale à une direction longitudinale de l'élément d'étanchéité (50) et l'élément d'étanchéité (50) est collé sur celle-ci,
**caractérisé en ce que**
l'élément d'étanchéité (50) est réalisé en une forme linéaire et incurvée, et l'élément d'étanchéité (50) est formé en collant un matériau résineux ayant une faible extensibilité dans la direction longitudinale de celui-ci, et est réalisé en collant un film de PET transparent et un film teinté recouvert de chrome l'un à l'autre et en appliquant uniformément un agent de liaison à la face de collage au capot extérieur (6).

2. Véhicule de type à selle (1) selon la revendication 1, dans lequel l'élément d'étanchéité (50) est configuré à partir d'une résine ayant une faible extensibilité au moins dans la direction longitudinale.

3. Véhicule de type à selle (1) selon la revendication 1 ou 2, dans lequel l'élément d'étanchéité (50) est divisé au niveau d'une position à laquelle le capot extérieur (6) est divisé.

4. Véhicule de type à selle (1) selon la revendication 3, dans lequel une partie d'extrémité d'une partie divisée de l'élément d'étanchéité (50) est formée en oblique par rapport à une ligne orthogonale à la direction longitudinale de l'élément d'étanchéité (50).

5. Véhicule de type à selle (1) selon l'une quelconque des revendications 1 à 4, dans lequel le capot extérieur (6) comporte une partie étagée (67b) à une position d'un bord inférieur de la face de collage de l'élément d'étanchéité (50) dans une région voisine d'une partie de bord extérieur d'un siège (27) prévu à un emplacement arrière du châssis de carrosserie de véhicule (10).

6. Véhicule de type à selle (1) selon l'une quelconque des revendications 1 à 5, dans lequel la face de collage de l'élément d'étanchéité (50) du capot extérieur (6) est configurée à partir d'une face incurvée formée à partir d'une partie linéaire inclinée successivement dans la direction orthogonale à la direction longitudinale de l'élément d'étanchéité (50).
